# EUROPÄISCHE PATENTSCHRIFT

(11) **EP 1 159 535 B1**
(45) Veröffentlichungstag und Bekanntmachung des Hinweises auf die Patenterteilung: **14.07.2004**
(21) Anmeldenummer: 00907575.5
(22) Anmeldetag: 17.02.2000
(51) Int. Cl.: F16B 13/06, F16B 13/12

(54) **SPREIZDÜBEL**
EXPANSION DOWEL
CHEVILLE A EXPANSION

(30) Priorität: 09.03.1999 DE 19910230
(43) Veröffentlichungstag der Anmeldung: 05.12.2001
(73) Patentinhaber: fischerwerke Artur Fischer GmbH & Co. KG, 72178 Waldachtal (DE)
(72) Erfinder: HEIN, Bernd, D-72270 Schönmünzach (DE); BERG, Ralph, D-79112 Freiburg (DE); NEHL, Wolfgang, D-72178 Waldachtal (DE)
(86) Internationale Anmeldenummer: PCT/EP2000/001282
(87) Internationale Veröffentlichungsnummer: WO 2000/053938

(56) Entgegenhaltungen:
- EP-A- 0 401 159
- NL-A- 7 002 127
- US-A- 5 425 609

## Beschreibung

Die Erfindung betrifft einen Spreizdübel mit den Merkmalen des Oberbegriffs des Anspruchs 1, der insbesondere durch Spritzgießen aus Kunststoff hergestellt ist.

Derartige Spreizdübel sind in einer Vielzahl von Ausgestaltungen an sich bekannt. Beispielhaft wird verwiesen auf die DE 34 26 994 C2. Die bekannten Spreizdübel weisen einen oftmals hülsenförmigen oder in Längsrichtung in zwei oder mehr Spreizschenkel unterteilten Dübelkörper auf, wobei der Dübelkörper jedenfalls im Bereich seines vorderen Endes hülsenartig mit einem in Dübellängsrichtung verlaufenden Einschraubloch ausgebildet ist. Der Dübelkörper ist durch Eindrehen einer Spreizschraube aufspreizbar, wobei die Spreizschraube in das Einschraubloch im vorderen Ende des Dübelkörpers eingeschraubt wird und dadurch mit dem vorderen Ende des Dübelkörpers in Eingriff steht.

Die bekannten Spreizdübel haben den Nachteil, daß sie nur für Spreizschrauben mit einem bestimmten Durchmesser geeignet sind, wobei Durchmesserabweichungen eng toleriert sind. Wird eine Spreizschraube mit zu kleinem Durchmesser gewählt, findet die Spreizschraube keinen oder nur schlechten Halt im Spreizdübel. Ist der Durchmesser der Spreizschraube zu groß, reißt sie beim Eindrehen den Dübelkörper zumindest im Bereich seines vorderen, das Einschraubloch aufweisenden Ende auf, zudem ist ein Einschraubmoment hoch.

Der Erfindung liegt die Aufgabe zugrunde, einen Spreizdübel der eingangs genannten Art so auszubilden, daß er mit Spreizschrauben verschiedenen Durchmessers wie vorgesehen aufspreizbar ist, also einen Spreizdübel, der einen vergrößerten Durchmessertoleranzbereich für die in ihn einzudrehenden Spreizschrauben aufweist.

Diese Aufgabe wird erfindungsgemäß durch die Merkmale des Anspruchs 1 gelöst. Der erfindungsgemäße Spreizdübel weist zumindest einen Keil auf, der im Bereich des oder vor dem vorderen Ende des Dübelkörpers so angeordnet ist, daß er mit einer in das Ein-schraubloch eingeschraubten oder durch das Einschraubloch durchgeschraubten Spreizschraube in Eingriff gelangt. Hat die Spreizschraube einen solchen Durchmesser, daß sie im Eingriff im Einschraubloch im vorderen Ende des Dübelkörpers ist, verschiebt sie den Keil, mit dem die Spreizschraube ebenfalls in Eingriff gelangt, nicht in axialer Richtung gegenüber dem Dübelkörper, da eine Gewindesteigung der Spreizschraube im Bereich des Keils und im vorderen Ende des Dübelkörpers gleich ist. Wird dagegen eine Spreizschraube mit kleinerem Durchmesser, die im vorderen Ende des Dübelkörpers keinen Halt findet, in den Spreizdübel eingedreht, zieht die Spreizschraube, die durch das Eindrehen in den Spreizdübel in Eingriff mit dem Keil gelangt, den Keil in das Einschraubloch im vorderen Ende des Spreizdübels ein. Der in das Einschraubloch eingezogene Keil verengt das Einschraubloch, so daß die Spreizschraube Halt im Einschraubloch findet und außer mit dem Keil in Eingriff mit dem vorderen Ende des Dübelkörpers gelangt. Durch Einziehen des Keils in das Einschraubloch wird dessen lichte Weite selbsttätig an Spreizschrauben unterschiedlichen Durchmessers angepasst, wobei eine Einziehtiefe des Keils abhängig vom Durchmesser der jeweiligen Spreizschraube ist. Mit Keil im Sinne der Erfindung ist jedes Element gemeint, das durch Einziehen in das Einschraubloch das Einschraubloch verengt und dadurch einen sicheren Eingriff der Spreizschraube bewirkt. Ein Keil im Sinne der vorliegenden Erfindung ist also auch ein konussegmentförmiges Teil oder dgl. Das vordere Ende des Dübelkörpers mit dem Einschraubloch wird für eine Spreizschraube mit großem Durchmesser ausgelegt, so daß das vordere Ende des Dübelkörpers durch Einschrauben der Spreizschraube nicht aufgerissen wird und das Eindrehmoment der Spreizschraube einen angemessene Wert nicht übersteigt. Der Keil ist, wie vorstehend erläutert, beim Eindrehen einer Spreizschraube mit großem Durchmesser funktionslos. Wird eine Spreizschraube mit kleinem Durchmesser in den Spreizdübel eingeschraubt, gelangt sie durch Einziehen des Keils in das vordere Ende des Dübelkörpers in sicheren Eingriff mit dem vorderen Ende des Dübelkörpers. Der erfindungsgemäße Spreizdübel hat den Vorteil, daß ein Durchmesserbereich der in ihn eindrehbaren Spreizschrauben vergrößert ist.

Vorzugsweise weist der erfindungsgemäße Spreizdübel zwei oder mehr Keile auf, zwischen die die Spreizschraube einschraubbar ist. Dabei sind zwei Keile einander gegenüber und mehrere Keile ähnlich wie bei einer Spannzange im Kreis angeordnet. Das Vorsehen von zwei oder mehr Keilen, zwischen die die Spreizschraube einschraubbar ist, verbessert den Eingriff der Spreizschraube.

Zur Anpassung an Spreizschrauben unterschiedlichen Durchmessers sind die Keile in radialer Richtung zueinander beweglich. In Dübellängsrichtung sind die Keile bei einer Ausgestaltung der Erfindung unbeweglich miteinander, so daß sich die Keile in Dübellängsrichtung nicht gegeneinander verschieben und gemeinsam in das vordere Ende des Dübelkörpers eingezogen werden. Auch die gegenseitige Unbeweglichkeit der Keile in Dübellängsrichtung verbessert den Eingriff und Halt der Spreizschraube zwischen den Keilen.

Bei einer Ausgestaltung der Erfindung, insbesondere bei der Herstellung des Spreizdübels als Spritzgießteil aus Kunststoff, ist der Keil bzw. sind die Keile einstückig mit dem Dübelkörper, wobei der Keil bzw. die Keile in Dübellängsrichtung verschiebbar ist/sind. Eine bewegliche und einstückige Verbindung der Keile mit dem Spreizdübel läßt sich beispielsweise über dünne Zungen erreichen. Die einstückige Ausbildung der Keile mit dem Spreizdübel hat den Vorteil, daß der Spreizdübel einschließlich seiner Keile in einem Spritzgießwerkzeug in einem Arbeitsgang herstellbar ist und daß eine anschließende Anbringung der Keile am Dübelkörper entfällt. Es handelt sich hierbei um eine bei der Herstellung des Spreizdübels durch Spritzgießen aus Kunststoff vorteilhafte Ausgestaltung der Erfindung.

Bei einer Ausgestaltung der Erfindung ist der Dübelkörper auf einem Teil seiner Länge (Spreizbereich) durch Längsschlitze in in Dübellängsrichtung verlaufende Spreizschenkel unterteilt. Dadurch eignet sich der erfindungsgemäße Spreizdübel sowohl für Vollbaustoffe, in denen die Spreizschenkel durch Eindrehen der Spreizschraube auseinandergedrückt und der Spreizdübel dadurch in einem Bohrloch verankert wird, als auch für Hohlbaustoffe oder Platten, in denen die Spreizschenkel durch Eindrehen der Spreizschraube nach außen ausknicken und dadurch den Hohlbaustoff oder die Platte hintergreifen. Die Spreizschenkel des erfindungsgemäßen Spreizdübels weisen Verzahnungen an ihren Innenseiten auf. Die Verzahnungen, zwischen die die Spreizschraube eingedreht wird, vergrößern die Aufspreizung der Spreizschenkel und erhöhen dadurch die Verankerungskraft des Spreizdübels in einem Bohrloch in einem Vollbaustoff. Weiterer Vorteil der Verzahnungen ist, daß diese ähnlich einem Innengewinde wirken, mit dem die Spreizschraube in Eingriff steht, und einen axialen Halt der Spreizschraube im Spreizdübel verbessem.

Bei einer Weiterbildung der Erfindung ist ein Zahnabstand der Verzahnungen einer Gewindesteigung der Spreizschraube angepaßt, d.h. der Zahnabstand entspricht in etwa der Gewindesteigung. Dies verringert das Eindrehmoment der Spreizschraube. Da die Verzahnungen eine Elastizität aufweisen, passen sie sich begrenzt an unterschiedliche Gewindesteigungen an, der Spreizdübel ist durch die Wahl des Zahnabstandes der Verzahnungen seiner Spreizschenkel also nicht auf eine bestimmte Gewindesteigung der Spreizschraube festgelegt.

Vorzugsweise sind die Verzahnungen der Spreizschenkel in axialer Richtung versetzt zueinander angeordnet und dadurch dem Fortgang des Gewindes der Spreizschraube angepaßt.

Bei einer Ausgestaltung der Erfindung weisen die Zähne der Verzahnungen im Mittelbereich ihrer Zahnköpfe Ausnehmungen auf, die die Spreizschraube beim Eindrehen in den Spreizdübel in Dübellängsrichtung führt. Die Ausnehmungen in der Mitte der Zahnköpfe wirken einem schrägen Eindrehen der Spreizschraube in den Spreizdübel und einem seitlichen Austreten der Spreizschraube zwischen den Spreizschenkeln heraus entgegen.

Bei einer Weiterbildung der Erfindung sind die Spreizschenkel in Dübellängsrichtung nach außen gewölbt. Die Wölbung der Spreizschenkel in Dübellängsrichtung erleichtert das Ausknicken der Spreizschenkel beim Verankern des Spreizdübels in einem Hohlbaustoff oder in einer Platte.

Die Erfindung wird nachfolgend anhand eines in der Zeichnung dargestellten Ausführungsbeispiels näher erläutert. Es zeigen:
- Figur 1: einen erfindungsgemäßen Spreizdübel in perspektivischer Darstellung ;
- Figur 2: den Spreizdübel aus Figur 1 in Seitenansicht;
- Figur 3: einen Achsschnitt des Spreizdübels aus Figur 1; und
- Figuren 4 bis 7: schematisierte Einzelheitdarstellungen gemäß Pfeil IV in Figur 3 zur Erläuterung der Funktion des erfindungsgemäßen Spreizdübels.

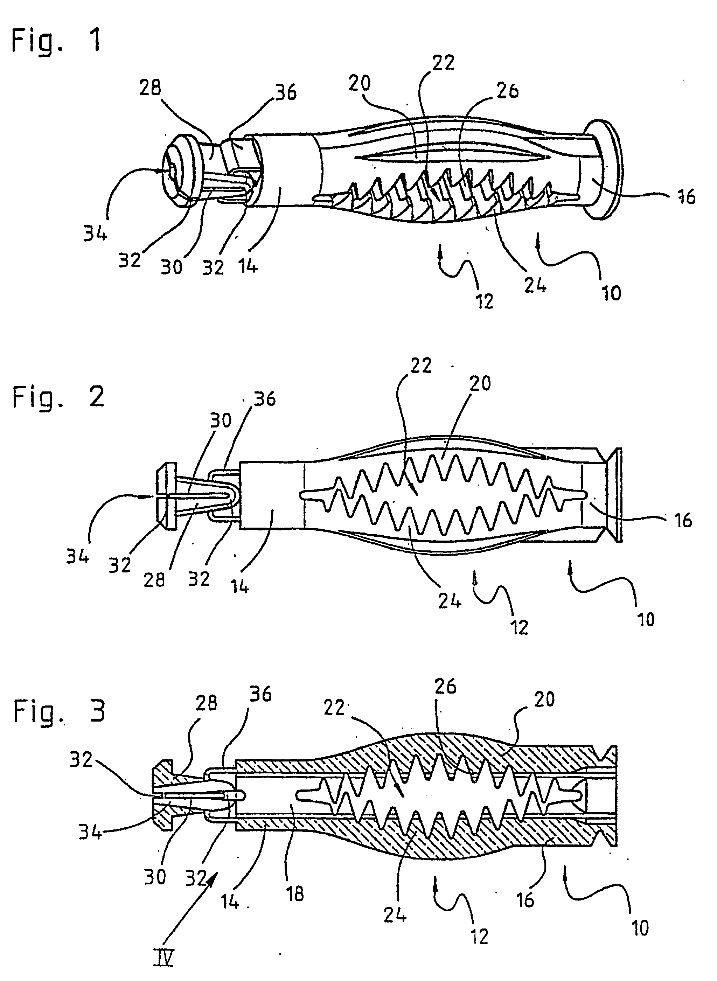

Der in Figuren 1 bis 3 dargestellte, erfindungsgemäße Spreizdübel 10 ist einstückig aus Kunststoff gespritzt. Er weist einen Dübelkörper 12 auf, der an einem vorderen Ende 14 und an einem hinteren Ende 16 als Hülse, also in Umfangsrichtung geschlossen, ausgebildet ist. Die Hülsen am vorderen und am hinteren Ende 14, 16 des Spreizdübels 10 werden in Dübellängsrichtung von einem Einschraubloch 18 für eine nicht dargestellte Spreizschraube durchsetzt. Zwischen den beiden Hülsen erstrecken sich zwei einander gegenüberliegend angeordnete Spreizschenkel 20, die in ihrem Längsverlauf nach außen gewölbt sind. Die Spreizschenkel 20 sind einstückig mit den Hülsen am vorderen und hinteren Ende 14, 16 des Spreizdübels und damit über die Hülsen an ihren Enden miteinander verbunden. Der Bereich zwischen den Hülsen, über den sich die Spreizschenkel 20 erstrecken, bildet einen Spreizbereich des Spreizdübels 10.

An ihren einander zugewandten Innenseiten sind die Spreizschenkel 20 mit Verzahnungen 22 versehen, wobei Zahnabstände der Zähne 24 der Verzahnungen 22 einen Abstand voneinander aufweisen, der einer Gewindesteigung des Gewindes der nicht dargestellten, in den Spreizdübel eindrehbaren Spreizschraube entspricht. Die Verzahnungen 22 sind in axialer Richtung versetzt zueinander, so daß das Gewinde der Spreizschraube auf beiden Seiten mit den Verzahnungen 22 der Spreizschenkel 20 in Eingriff steht. Die Zähne 24 der Verzahnungen 22 weisen in der Mitte ihrer Zahnköpfe Ausnehmungen 26 auf, die die Spreizschraube beim Eindrehen in den Spreizdübel 10 in Längsrichtung des Spreizdübels 10 führen. Die Ausnehmungen 26 bilden einen Schraubenkanal für die Spreizschraube.

Vor dem als Hülse ausgebildeten vorderen Ende 14 des Spreizdübels 10 sind zwei Keile 28 nebeneinander angeordnet. Eine verjüngte Seite der Keile 28 ist dem vorderen Ende 14 des Dübelkörpers 12 zugewandt. Zwischen den Keilen 28 besteht ein Spalt 30, der sich in einer Mittelebene des Spreizdübels 10 befindet. Die Keile 28 sind über Solltrennstellen 32 miteinander verbunden, so daß sie sich in Dübellängsrichtung nicht gegeneinander verschieben. An ihren einander zugewandten Flächen sind die Keile 28 mit einer Längsrille versehen, die zusammen einen Einschraubkanal 34 für die nicht dargestellte Spreizschraube bilden. Der Einschraubkanal 34 ist coaxial zum Spreizdübel 10 angeordnet, ein Durchmesser des Einschaubkanals ist kleiner als eine lichte Weite des Einschraublochs 18 in der Hülse am vorderen Ende 14 des Dübelkörpers 12. Der Einschraubkanal 34 zwischen den Keilen 28 verjüngt sich mit zunehmenden Abstand vom vorderen Ende 14 des Spreizdübels 10. Die Keile 28 befinden sich also vor dem Einschraubloch 18 im vorderen Ende 14 des Dübelkörpers 12, sie sind mit je einer henkelförmigen Lasche 36 einstückig mit dem vorderen Ende 14 des Dübelkörpers 12 verbunden.

Die Funktion des erfindungsgemäßen Spreizdübels 10 ist folgende: Zur Verankerung in einem Bohrloch in einem Vollbaustoff wie beispielsweise Beton wird der Spreizdübel 10 in das Bohrloch gesteckt, wobei seine beiden Spreizschenkel 20 zusammengedrückt werden. Anschließend wird die nicht dargestellte Spreizschraube in den Spreizdübel 10 eingedreht, wobei sich ein Gewinde der Spreizschraube mit den Verzahnungen 22 an den Innenseiten der Spreizschenkel 20 in Eingriff kommt und wobei die Spreizschraube die Spreizschenkel 20 auseinanderspreizt. Der Spreizdübel 10 ist dadurch im Bohrloch verankert.

Wird der Spreizdübel 10 in ein Bohrloch in einem Hohlbaustoff wie beispielsweise einem Hohlblockstein oder in ein Bohrloch in einer Platte eingesetzt, und anschließend die nicht dargestellte Spreizschraube in den Spreizdübel 10 eingedreht, zieht die Spreizschraube das als Hülse ausgebildete vordere Ende 14 des Dübelkörpers 12 in Richtung dessen hinteren Endes 16. Dabei knicken die Spreizschenkel 20 begünstigt durch ihre Wölbung nach außen aus und hintergreifen dadurch den Hohlbaustoff oder die Platte formschlüssig.

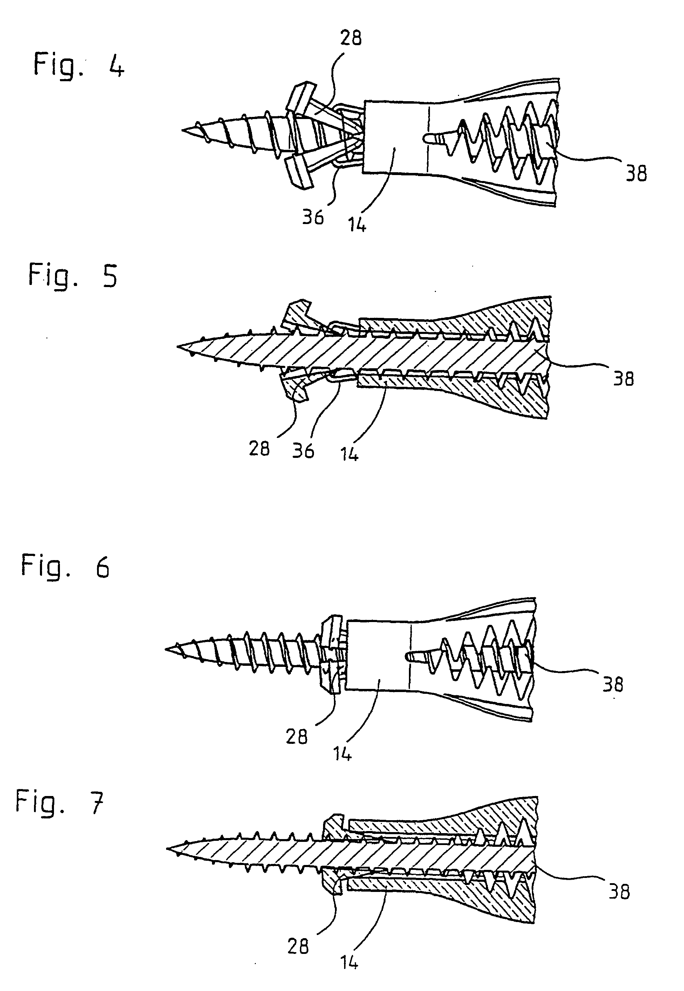

Wird eine Spreizschraube mit großem Durchmesser in den Spreizdübel 10 eingeschraubt, so schneidet sie sich ihr Gewinde insbesondere im vorderen Ende 14 des Spreizdübels 10 selbst, wie in Figuren 4 und 5 dargestellt, eine Spreizschraube mit großem Durchmesser steht also sicher in Eingriff mit dem vorderen Ende 14 des Spreizdübels 10. Die Spreizschraube 38 schraubt sich durch die beiden Keile 28 hindurch und reißt diese an den Solltrennstellen 32 auseinander. Da die Spreizschraube 38 mit ihrem Gewinde mit derselben Gewindesteigung im vorderen Ende 14 des Dübelkörpers 12 und mit den beiden Keilen 28 in Eingriff steht, bewegen sich die Keile 28 nicht in axialer Richtung in Bezug auf das vordere Ende 14 des Spreizdübels 10.

Wird dagegen, wie in Figuren 6 und 7 dargestellt, eine Spreizschraube 38 mit kleinerem Durchmesser in den Spreizdübel 10 eingedreht, die nicht oder nur schwach mit dem vorderen Ende 14 des Dübelkörpers 10 in Eingriff steht, zieht diese Spreizschraube 38 durch ihren Eingriff mit den Keilen 28 und den fehlenden Eingriff mit dem vorderen Ende 14 des Dübelkörpers 12 die Keile 28 in das Einschraubloch 18 im vorderen Ende 14 des Dübelkörpers 12 hinein, wie insbesondere in Figur 7 zu sehen. Die Keile 28 verkleinern eine lichte Weite des Einschraublochs im vorderen Ende 14 des Dübelkörpers 12 und die Keile 28 werden von dem als Hülse ausgebildeten vorderen Ende 14 enger zusammen und damit in Eingriff mit dem Gewinde der Spreizschraube 38 gedrückt. Dadurch steht auch eine Spreizschraube 38 mit kleinem Durchmesser, die nicht unmittelbar mit dem vorderen Ende 14 des Dübelkörpers 12 in Eingriff steht, über die Keile 28 in Eingriff mit dem vorderen Ende 14 des Dübelkörpers 12. Durch die Keile 28, die von einer Spreizschraube 38 kleinen Durchmessers in das vordere Ende 14 des Dübelkörpers 12 eingezogen werden, paßt sich der Spreizdübel 10 an eine Spreizschraube 38 mit kleinem Durchmesser an. Die Keile 28 bewirken einen sicheren Halt der Spreizschraube 38 im Spreizdübel 10 sowie eine sichere Verankerung des Spreizdübels 10 in einem Vollbaustoff, einem Hohlbaustoff oder einer Platte auch bei Verwendung einer Spreizschraube 38 mit kleinem Durchmesser. Die Laschen 36, die die Keile 28 mit dem vorderen Ende 14 des Dübelkörpers 12 verbinden, können beim Einziehen der Keile 28 in das vordere Ende 14 abgerissen oder abgeschert werden.

## Patentansprüche

1. Spreizdübel mit einem durch Eindrehen einer Spreizschraube aufspreizbaren Dübelkörper, wobei der Dübelkörper einen in Dübellängsrichtung durchgehenden Schraubenkanal für die Spreizschraube aufweist, der zumindest in einem vorderen Ende des Dübelkörpers ein Einschraubloch bildet, in welches die Spreizschraube einschraubbar ist, **dadurch gekennzeichnet, daß** der Spreizdübel (10) einen Keil (28) aufweist, der im Bereich des oder vor dem vorderen Ende (14) des Dübelkörpers (12) so angeordnet ist, daß die Spreizschraube (38) beim Einschrauben in das vordere Ende (14) des Dübelkörpers (12) mit dem Keil (28) in Eingriff kommt, und daß der Keil (28) in das Einschraubloch (18) im vorderen Ende (14) des Dübelkörpers (12) einziehbar ist.

2. Spreizdübel nach Anspruch 1, **dadurch gekennzeichnet, daß** der Spreizdübel (10) zwei oder mehr Keile (28) aufweist, zwischen die die Spreizschraube (38) einschraubbar ist.

3. Spreizdübel nach Anspruch 2, **dadurch gekennzeichnet, daß** die Keile (28) in radialer Richtung beweglich und in Dübellängsrichtung unbeweglich miteinander sind.

4. Spreizdübel nach Anspruch 1, **dadurch gekennzeichnet, daß** der Keil (28) einstückig mit dem Dübelkörper (12) und in Dübellängsrichtung verschiebbar ist.

5. Spreizdübel nach Anspruch 1, **dadurch gekennzeichnet, daß** der Dübelkörper (12) in einem sich in Dübellängsrichtung erstreckenden Spreizbereich in Dübellängsrichtung verlaufende Spreizschenkel (20) aufweist, und daß die Spreizschenkel (20) an ihren Innenseiten Verzahnungen (22) aufweisen.

6. Spreizdübel nach Anspruch 5, **dadurch gekennzeichnet, daß** die Verzahnungen (22) der Spreizschenkel (20) versetzt zueinander angeordnet sind, so daß die Verzahnungen (22) bei radial gegeneinander gedrückten Spreizschenkeln (20) ineinander greifen.

7. Spreizdübel nach Anspruch 5, **dadurch gekennzeichnet, daß** Zahnköpfe von Zähnen (24) der Verzahnungen (22) eine Ausnehmung (26) in ihrem Mittelbereich aufweisen, wobei die Ausnehmungen (26) der Zähne (24) der Verzahnungen (22) den Schraubenkanal für die Spreizschraube (38) bilden.

8. Spreizdübel nach Anspruch 5, **dadurch gekennzeichnet, daß** die Spreizschenkel (20) in Dübellängsrichtung nach außen gewölbt sind.

## Claims

1. Expansible fixing plug having a fixing plug body that is expansible by screwing in an expander screw, the fixing plug body having a screw channel for the expander screw, which channel passes through the fixing plug body in its longitudinal direction and forms, at least in a forward end of the fixing plug body, a screw-receiving hole into which the expander screw can be screwed, **characterized in that** the expansible fixing plug (10) has a wedge (28) which is so arranged in the region of, or in front of, the forward end (14) of the fixing plug body (12) that the expander screw (38), on being screwed into the forward end (14) of the fixing plug body (12), enters into engagement with the wedge (28), and the wedge (28) can be drawn into the screw-receiving hole (18) in the forward end (14) of the fixing plug body (12).

2. Expansible fixing plug according to claim 1, **characterized in that** the expansible fixing plug (10) has two or more wedges (28) between which the expander screw (38) can be screwed in.

3. Expansible fixing plug according to claim 2, **characterized in that** the wedges (28) are in the radial direction movable and in the longitudinal direction of the fixing plug immovable with one another.

4. Expansible fixing plug according to claim 1, **characterized in that** the wedge (28) is integral with the fixing plug body (12) and is displaceable in the longitudinal direction of the fixing plug.

5. Expansible fixing plug according to claim 1, **characterized in that** the fixing plug body (12) has, in an expansion zone extending in the longitudinal direction of the fixing plug, expansion limbs (20) which extend in the longitudinal direction of the fixing plug, and the expansion limbs (20) have sets of teeth (22) on their inner sides.

6. Expansible fixing plug according to claim 5, **characterized in that** the sets of teeth (22) of the expansion limbs (20) are arranged staggered relative to one another so that the sets of teeth (22) engage in one another when the expansion limbs (20) are pressed radially towards one another.

7. Expansible fixing plug according to claim 5, **characterized in that** tooth tips of teeth (24) of the sets of teeth (22) have a recess (26) in their central region, the recesses (26) of the teeth (24) of the sets of teeth (22) forming the screw channel for the expander screw (38).

8. Expansible fixing plug according to claim 5, **characterized in that** the expansion limbs (20) are outwardly curved in the longitudinal direction of the fixing plug.

## Revendications

1. Cheville à expansion avec un corps de cheville expansible par vissage d'une vis d'expansion, le corps de la cheville comportant un canal de vis continu dans le sens longitudinal de la cheville pour la vis d'expansion, canal qui forme un trou de vissage au moins dans une extrémité avant du corps de la cheville, trou dans lequel la vis d'expansion peut être vissée, **caractérisée en ce que** la cheville d'expansion (10) comprend une clavette (28) qui est disposée dans la zone de l'extrémité ou devant l'extrémité avant (14) du corps de la cheville (12) de sorte que la vis d'expansion (38) entre en contact avec la clavette (28) lors du vissage dans l'extrémité avant (14) du corps de la cheville (12), et de sorte que la clavette (28) est rétractable dans le trou de vissage (18) dans l'extrémité avant (14) du corps de la cheville (12).

2. Cheville à expansion selon la revendication 1, **caractérisée en ce que** la cheville à expansion (10) comporte deux clavettes (28) ou plus, entre lesquelles la vis d'expansion (38) peut être vissée.

3. Cheville à expansion selon la revendication 2, **caractérisée en ce que** les clavettes (28) sont mobiles ensemble en sens radial et immobiles dans le sens longitudinal de la cheville.

4. Cheville à expansion selon la revendication 1, **caractérisée en ce que** la clavette (28) est coulissante en un morceau avec le corps de la cheville (12) et dans le sens longitudinal de la cheville.

5. Cheville à expansion selon la revendication 1, **caractérisée en ce que** le corps de la cheville (12) comporte des côtés d'expansion (20) allant dans le sens longitudinal de la cheville dans une zone d'expansion s'étendant dans le sens longitudinal de la cheville (20), et **en ce que** les côtés d'expansion (20) comprennent des dentures (22) sur leurs faces internes.

6. Cheville à expansion selon la revendication 5, **caractérisée en ce que** les dentures (22) des côtés d'expansion (20) sont placées en quinconce les unes par rapport aux autres de sorte que les dentures (22) s'engrènent lorsque les côtés d'expansion (20) sont pressés radialement l'un contre l'autre.

7. Cheville à expansion selon la revendication 5, **caractérisée en ce que** les sommets des dents (24) des dentures (22) comportent un creux (26) dans leur zone médiane, les creux (26) des dents (24) des dentures (22) formant le canal de la vis pour la vis d'expansion (38).

8. Cheville à expansion selon la revendication 5, **caractérisée en ce que** les côtés d'expansion (20) sont bombés vers l'extérieur dans le sens longitudinal de la cheville.
